# EUROPEAN PATENT APPLICATION

(11) **EP 4 254 179 A1**
(43) Date of publication of application: **04.10.2023**
(21) Application number: 23159603.2
(22) Date of filing: 02.03.2023
(51) Int. Cl.: G06F 9/38

(54) **VARIABLE-LENGTH INSTRUCTION STEERING TO INSTRUCTION DECODE CLUSTERS**

(30) Priority: 02.04.2022 US 202217712139
(71) Applicant: Intel Corporation, Santa Clara, CA 95054 (US)
(72) Inventor: AZEEM, Muhammad, Hillsboro, OR 97124 (US); BASU ROY CHOWDHURY, Rangeen, Beaverton, OR 97008 (US); ZOU, Xiang, Portland, OR 97229 (US); AHMADI, Malihe, Sudbury, MA 01776 (US); ZAJO, Joju Joseph, Portland, OR 97229 (US); SABBA, Ariel, Portland, OR 97229 (US); CHRISTIANSEN, Ammon, Hillsboro, OR 97124 (US); XEKALAKIS, Polychronis, Portland, OR 97229 (US); KILADA, Eliyah, Portland, OR 97229 (US)
(74) Representative: Samson & Partner Patentanwälte mbB

(57) **Abstract**

Embodiments of apparatuses and methods for variable-length instruction steering to instruction decode clusters are disclosed. In an embodiment, an apparatus includes a decode cluster and chunk steering circuitry. The decode cluster includes multiple instruction decoders. The chunk steering circuitry is to break a sequence of instruction bytes into a plurality of chunks, create a slice from a one or more of the plurality of chunks based on one or more indications of a number of instructions in each of the one or more of the plurality of chunks, wherein the slice has a variable size and includes a plurality of instructions, and steer the slice to the decode cluster.

## Description

### TECHNICAL FIELD

The technical field relates generally to information processing systems, and, more specifically, but without limitation, to decoding instructions in information processing systems.

### BACKGROUND

An information processing system may execute software (or code) including instructions (or macro-instructions) in an instruction set of a processor in the system. The processor may include an instruction decoder to decode the instructions and/or generate or derive micro-operations, micro-code entry points, micro-instructions, other instructions, or other control signals from the original instructions.

### BRIEF DESCRIPTION OF THE DRAWINGS

Various embodiments in accordance with the present disclosure will be described with reference to the drawings, in which:
Figure 1 is a block diagram of a processor core in which embodiments may be implemented.
Figure 2 is a block diagram of a processor core in which embodiments may be implemented.
Figures 3A, 3B, and 3C are block diagrams to illustrate an instruction steering mechanism according to embodiments.
Figures 4A and 4B are block diagrams to illustrate an instruction steering unit for variable chunk steering according to embodiments.
Figures 5A, 5B, and 5C are a combination of a flow and a block diagram illustrating both a method and some of the apparatus for instruction steering according to embodiments.
Figure 6 is a diagram representing a steer-to-cluster variable steering pipeline according to embodiments.
FIG. 7 illustrates embodiments of an exemplary system.
FIG. 8 illustrates a block diagram of embodiments of a processor that may have more than one core, may have an integrated memory controller, and may have integrated graphics.
FIG. 9(A) is a block diagram illustrating both an exemplary in-order pipeline and an exemplary register renaming, out-of-order issue/execution pipeline according to embodiments.
FIG. 9(B) is a block diagram illustrating both an exemplary embodiment of an in-order architecture core and an exemplary register renaming, out-of-order issue/execution architecture core to be included in a processor according to embodiments.
FIG. 10 illustrates embodiments of execution unit(s) circuitry, such as execution unit(s) circuitry of FIG. 9(B).
FIG. 11 is a block diagram of a register architecture according to some embodiments.
FIG. 12 illustrates embodiments of an instruction format.
FIG. 13 illustrates embodiments of the addressing field.
FIG. 14 illustrates embodiments of a first prefix.
FIGS. 15(A)-(D) illustrate embodiments of how the R, X, and B fields of the first prefix are used.
FIGS. 16(A)-(B) illustrate embodiments of a second prefix.
FIG. 17 illustrates embodiments of a third prefix.
FIG. 18 illustrates a block diagram contrasting the use of a software instruction converter to convert binary instructions in a source instruction set to binary instructions in a target instruction set according to embodiments.

### DETAILED DESCRIPTION

The present disclosure relates to methods, apparatus, systems, and non-transitory computer-readable storage media for variable-length instruction steering to instruction decode clusters.

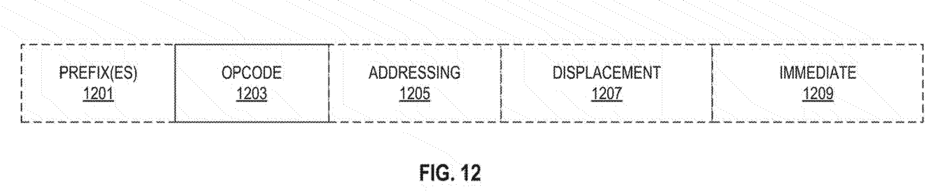

As mentioned in the background section, a processor in an information processing system or other electronic product may include an instruction decoder to decode instructions (or macro-instructions) and/or generate, derive, etc. micro-operations, micro-code entry points, micro-instructions, other instructions, other control signals, etc. from the original instructions (any such generating, deriving, etc. may be referred to as decoding). The original instructions may be included in an instruction set of the processor that provides for different instruction lengths (e.g., see Figures 12-17 and the corresponding descriptions). The use of embodiments may be desired to provide for decoding sequences of instructions faster and/or more efficiently and/or otherwise providing for faster execution of software and/or higher overall performance of the processor and/or system.

While various features are described in the context of the below example core organization, alternative embodiments may implement such features in other example core organizations.

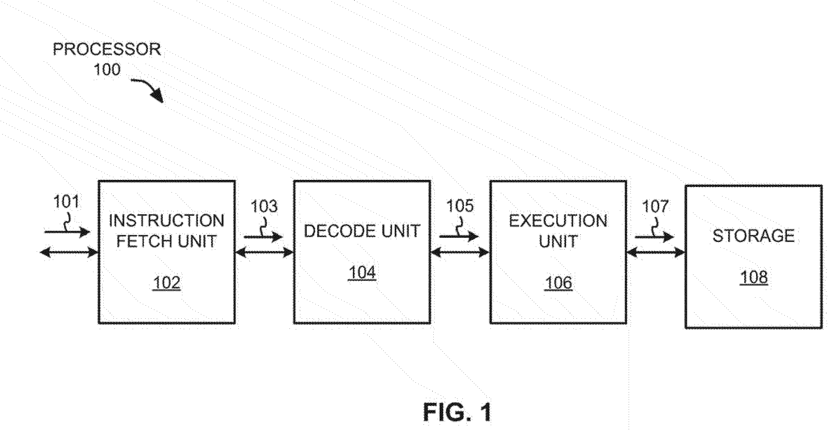

Figure 1 is a block diagram of an embodiment of a processor core 100 in which some embodiments may be implemented. In some embodiments, the processor core may be implemented for or in a general-purpose processor (e.g., a central processing unit (CPU) or other general-purpose microprocessor of the type used in servers, desktop, laptop, smart phones, or other computers). Alternatively, the processor core may be implemented for or in a special-purpose processor. Examples of suitable special-purpose processors include, but are not limited to, network processors, communications processors, graphics processors, co-processors, digital signal processors (DSPs), embedded processors, and controllers (e.g., microcontrollers). The processor and/or processor core may be disposed on a semiconductor die or integrated circuit and may include hardware (e.g., transistors, circuitry, etc.).

The processor core 100 has an instruction fetch unit 102, a decode unit 104, an execution unit 106, and storage 108. The instruction fetch unit or fetch unit may fetch instructions 101. The instructions 101 may represent macroinstructions, instructions of an instruction set of the processor, instructions that the decode unit 104 is able to decode, or the like. The fetch unit 102 may be coupled to receive the instructions 101 from on-die storage (not shown) of the processor, such as, for example, one or more caches, buffers, queues, or the like, and/or from system memory. The decode unit 104 is coupled with the fetch unit 102 to receive the fetched instructions 103 (e.g., the same instructions but reordered), and may be operable to decode the fetched instructions 103 into one or more relatively lower-level instructions or control signals 105 (e.g., one or more microinstructions, micro-operations, micro-code entry points, decoded instructions, or control signals, etc.). The execution unit 106 may be coupled with the decode unit to receive the one or more lower-level instructions or control signals 105 and may be operable to generate corresponding results 107. The results 107 may be stored in on-die storage 108 of the processor (e.g., registers, caches, etc.) or in memory.

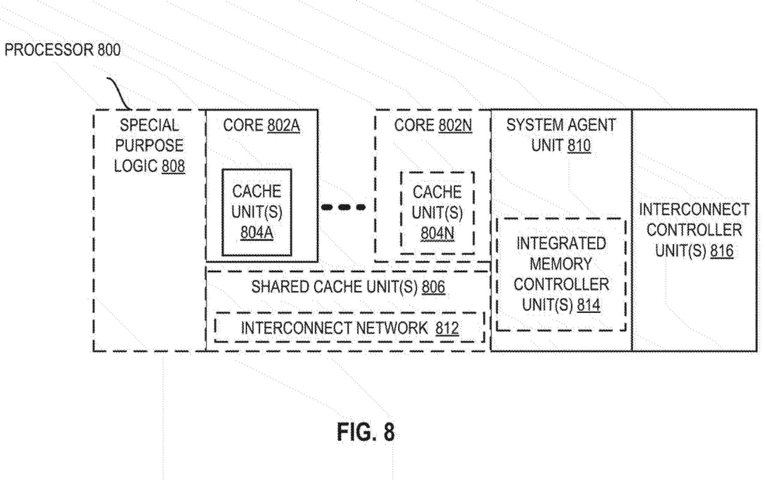

To avoid obscuring the description, a relatively simple processor 100 has been shown and described. Other processors may include multiple decode units, multiple execution units, and so on. Also, the processor may optionally include other processor components, such as those shown and described below for any of Figures 8, 9B, 10, and 11.

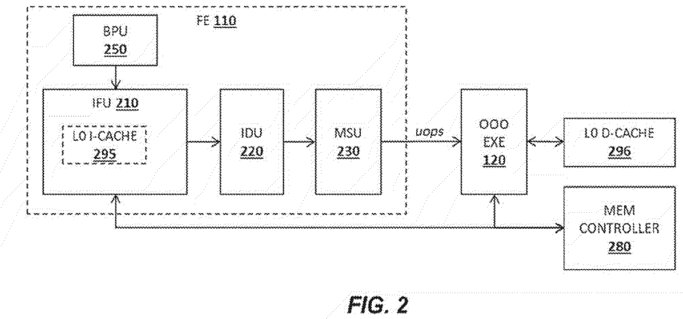

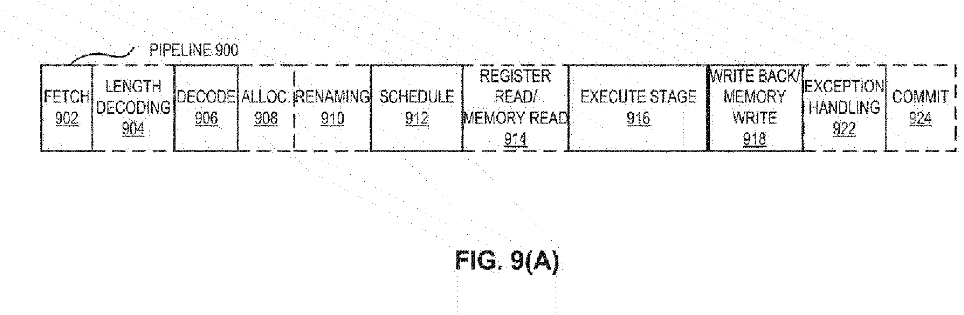

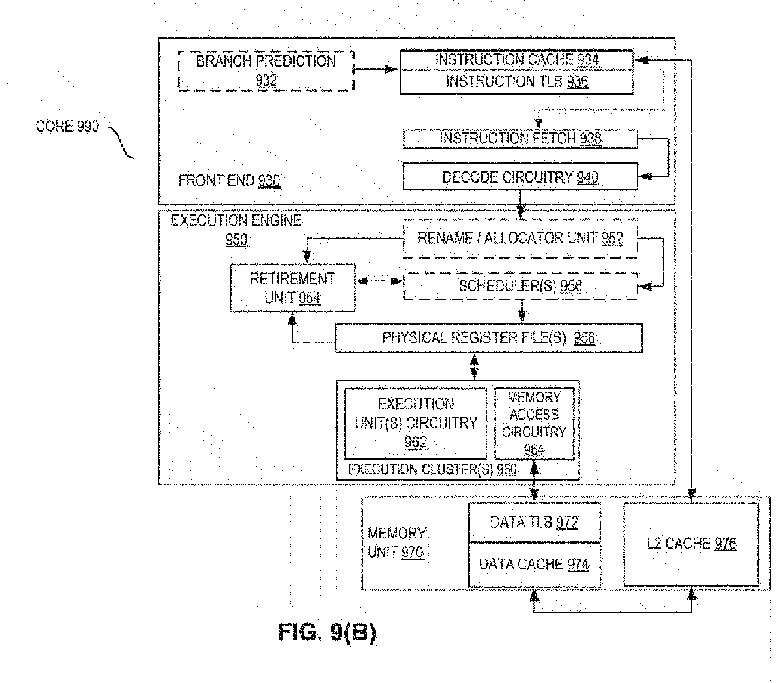

Referring now to Figure 2, the front end (FE) 110 of an example core 100 includes an instruction fetch unit (IFU) 210, an instruction decode unit (IDU) 220, and a microcode sequencing unit (MSU) 230. In embodiments, FE 110 may correspond to FE 930, IFU 210 to instruction fetch block 938, and IDU 220 to instruction decode circuitry 940 of Figure 9.

The IFU 210 fetches instruction bytes from the memory subsystem (e.g., connected to memory controller 280) or cache (e.g., the level 0 (L0) instruction cache (I-cache or IC) 295) and provides the fetched instructions to the IDU 220. The fetch process may begin with the IFU 210 reading from a sequence of fetch addresses predicted by a Branch Prediction Unit (BPU) 250 and stored in a queue (e.g., a Hit Vector Queue (HVQ)). The IFU 210 then fetches the requested instruction bytes and sends these bytes to the IDU 220.

Embodiments of the IFU 210 may include one or more of the following units (several of which are not illustrated in Figure 2):
- Hit Vector Queue (HVQ) with up to 4 reads
- 256 kB level 1 (L1) cache with 2 banked read ports
- 12-entry L0 cache with 4-6 read ports
- Instruction Streaming Buffer (ISB) with 4 banked read ports
- Fill Unit performing Instruction Length Decode (ILD) on 32 bytes/cycle
- Migrate Unit (moves up to two cache lines per cycle from the ISB to the L1 IC)

Some of the distinguishing features of embodiments of the IFU 210 may include:
- Read full 64-byte cache lines (aligned)
- Use the L0 cache to increase fetch bandwidth
- Intermix reads from L0, L1, and ISB
- Read multiple entries from HVQ, dependent on how many fetch block reads can be satisfied
- Fetch pre-decode (PD) bits to guide decode steering
- Fills do instruction length decode (ILD) to compute pre-decode bits

Much of the control logic for the instruction cache is located in the BPU 250. In particular, the IC and ISB tags are located within the pipeline inside the BPU. The pre-decode cache data is located in the IFU.

The IDU 220 translates ordered bytes from the IFU 210 into internal hardware-level micro-instructions (uops). The IDU 220 activates the microcode sequencer unit (MSU) 230 to control the sequencing of uops through the remaining pipeline stages. For example, the uops may be delivered in program order to renaming and allocation (RA) units within the out-of-order (OOO) execution circuitry 120. In various embodiments, the IDU 220 includes a micro architecture that can decode twenty-four instructions in parallel to sustain a very wide and deep back-end.

In various embodiments, the IDU 220 may perform the following functions:
- divide and steer instruction bytes from up to four cache lines to six decode clusters
- within each cluster, steer up to four instructions to four decoders per cycle
- decode instruction bytes to identify prefixes, opcode, and instruction fields and verify the length of the instruction
- generate micro-instructions called aliased uops (AUOPs) using the decoded information
- deliver the aliased uops to the MSU 230 and/or OOO execution circuitry 120 (e.g., to operate on data from L0 data cache (D-cache) 296) via a decoded uop queue (DUQ), which consists of two separate types of queues: aliased uop queues (DUQUs) and immediate queues (DUQMs)
- activate the MSU 230 to control the sequencing of uops
- detect different types of branches (such as conditional, indirect, call (CALL), return (RET), and direct) for Branch Address Calculation (BAC) to calculate the next sequential address and target address for direct branches and verify the branch target buffer (BTB) predicted address

In various embodiments, the core 100 is a complex-instruction-set-computer (CISC) architecture where the instructions are variable length and a single instruction may support complex functionality. One of the functions of the FE 110 is to translate the CISC instructions (e.g., x86 or IA32 instructions) to reduced-instruction-set-computer (RISC) like uops. These uops may be generated by the IDU 220 when decoding instructions or may be read from a read-only memory (ROM) that contains microcode flows made up of uops.

In embodiments, IDU 220 includes hardware to implement an instruction steering mechanism designed to, in a first level (steer-to-cluster or STC), break a sequence of instruction bytes from IFU 210 into fixed size (e.g., 8B or 16B) chunks and steer a variable number of chunks to each decode cluster, and, in a second level, steer one instruction worth of bytes to each decoder. In embodiments, IDU 220 is configured to perform the first level within to an instruction chunk steering (IS) pipeline (e.g., having four stages) and the second level within an instruction decode (ID) pipeline (e.g., having three stages). In embodiments, the IS pipeline overlaps with the instruction fetch (IF) pipeline. In the IS pipeline, IDU 220 computes the steering control signals and then steers instruction chunks from the IFU to decoder clusters.

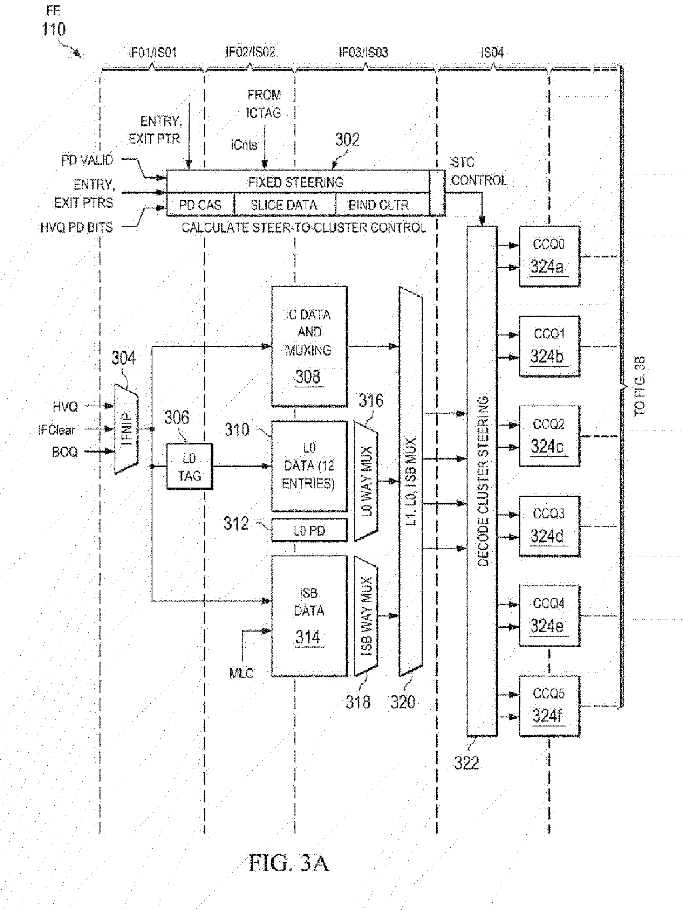

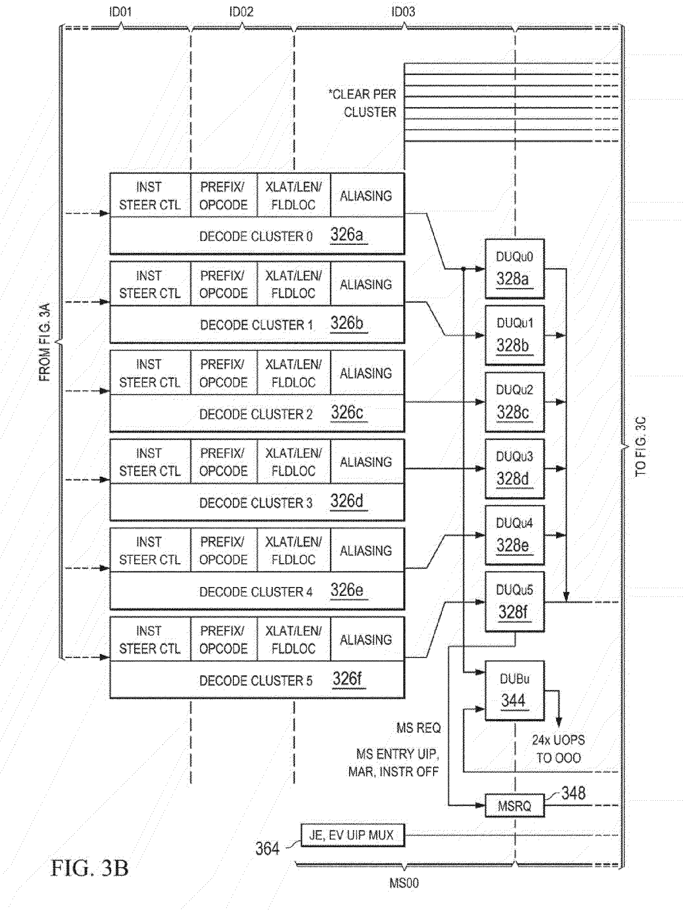

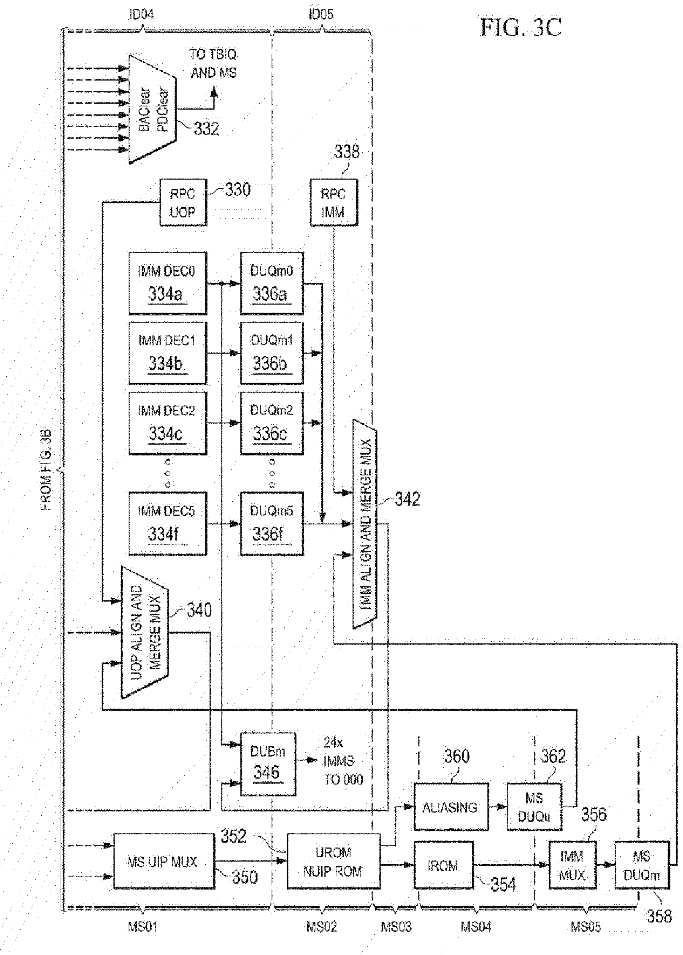

Figures 3A, 3B, and 3C are block diagrams to illustrate, within FE 110, an instruction steering mechanism according to embodiments. Figures 3A, 3B, and 3C show blocks of IDU 220, along with selected blocks of IFU 210, MSU 230, and BPU 250, within stages of the IF, IS, instruction decode (ID), and microcode sequencing (MS) pipelines. Shown and/or described below are IDU 220 steering control block 302 (including pre-decode chunk-aligned steering PD CAS logic, slice data logic, and bind control logic), decode cluster steering block 322, CCQs 324a to 324f, decode clusters 326a to 326f (each including instruction steering control logic, prefix/opcode logic, translation/length/field-location, and aliasing logic), DUQUs 328a to 328f, branch address and pre-decode clear multiplexer 332, immediate decoders 334a to 334f, DUQMs 336a to 336f, micro-operation align and merge multiplexer 340, immediate align and merge multiplexer 342, DUBU 344, DUBM 346, and microcode sequencing read queue (MSRQ) 348; IFU 210 blocks IF next instruction pointer (IFNIP) 304, L0 tag block 306, instruction count (IC) data and multiplexing block 308, L0 data block 310, L0 pre-decode block 312, ISB data block 314, L0 way multiplexer 316, ISB way multiplexer 318, and L1/L0/ISB multiplexer 320; MSU 230 blocks 350, microcode ROM and next microcode instruction pointer (NUIP) ROM 352, 354, 356, 358, 360, 362, and jump execution event microcode instruction pointer multiplexer (JE EV UIP) 364; and BPU 250 blocks 330 and immediate recovery path cache 338.

In IDU 220, steering control block 302 is to control steering of instruction bytes from IFU 210, through instruction steering block 322, to a decoder configuration that includes multiple decoders (e.g., twenty-four to forty-eight), partitioned into multiple (e.g., six to twelve) decode clusters 326a to 326f, each including multiple (e.g., two to six) decoders. Each of decode clusters 326a to 326f is associated with a cluster chunk queue (CCQ) 324a to 324f to bridge the IS pipeline over to the ID pipeline, as well as a DUQU 328a to 328f, an immediate decoder (IMM DEC) 334a to 334f, and a DUQM 336a to 336f.

In Figure 3A, steering control block 302 is shown as providing fixed steering (i.e., steering a fixed number (e.g., one) of chunks to each decode cluster). Fixed steering may be designed with an objective of steering, on average, one instruction per decoder per cycle. For example, with an average instruction length of four bytes, steering one 16B chunk to each CCQ per cycle would average to one instruction per decoder per cycle. To implement fixed steering, steering control block 302 looks at cache line entry and exit points to identify the valid chunks but does not try to use information about the number of instructions. For the most part (not accounting for instructions split across chunks, which can result is additional chunks), the slice size (number of bytes are steered to each cluster) is fixed.

Embodiments may also or instead support a variety of other chunk steering algorithms, each possibly having different complexity and pipeline length, and the one used for a set of cache lines may depend on the source of the cache lines (i.e., based on the alignment of the IFU pipeline and the IS pipeline). The chunk steering control aims to minimize the cases in which the number of instructions received by a decoder cluster exceeds the number of decoders in a decoder cluster. It may achieve this goal by determining the number of 16B chunks, from up to four cache lines read from the IC/L0/ISB in a cycle, that each decoder cluster should receive. In addition, the chunk steering control may reserve one extra renaming and allocation lane for instructions that require two such lanes.

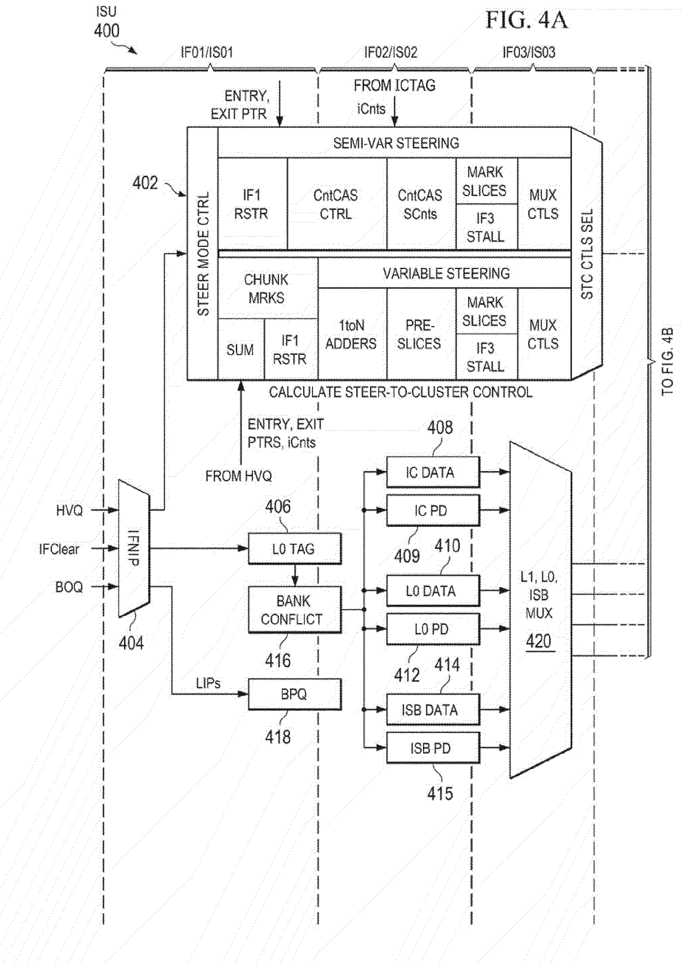

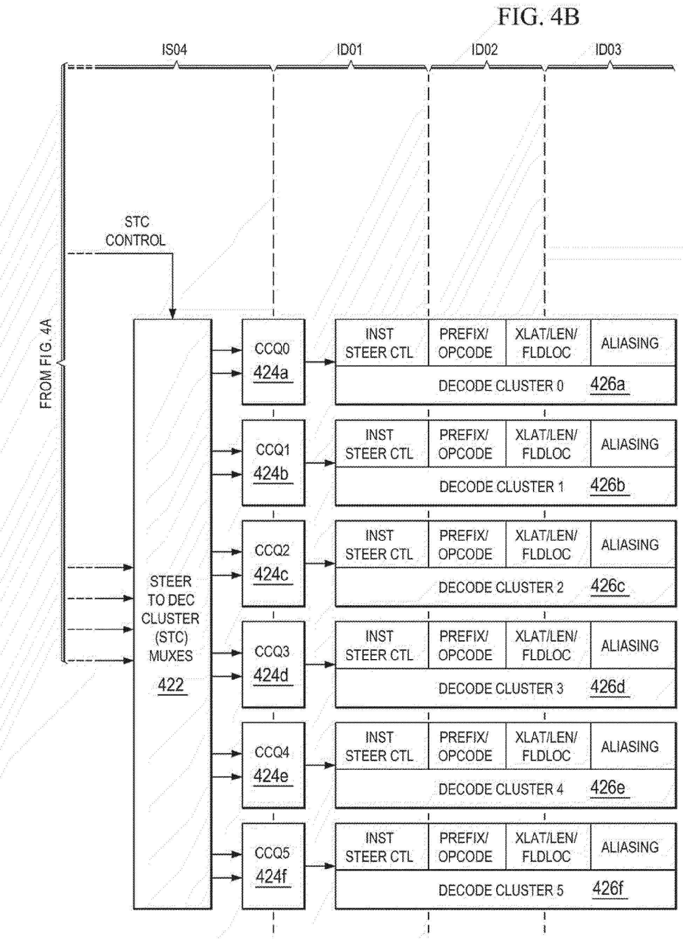

Figures 4A and 4B are block diagrams to illustrate an instruction steering unit (ISU) 400 for variable chunk steering according to embodiments. Figures 4A and 4B show blocks of IDU 220 designated as ISU 400, along with selected blocks of IFU 210, within stages of the IF, IS, and ID pipelines. Shown and/or described below are ISU 400 blocks 402 and 422; IDU 220 blocks 424a to 424f and 426a to 426f; and IFU 210 blocks 404, 406, 408, 409, 410, 412, 414, 415, 416, 418, and 420, each corresponding to a similar block of Figure 3A/3B/3C.

In ISU 400, steering control block 402 is to control steering of instruction bytes from IFU 210, through instruction steering block 422, to a decoder configuration that includes multiple decoders (e.g., twenty-four to forty-eight), partitioned into multiple (e.g., six to twelve) decode clusters 426a to 426f, each including multiple (e.g., two to six) decoders. Each of decode clusters 426a to 426f is associated with a cluster chunk queue (CCQ) 424a to 424f to bridge the IS pipeline over to the ID pipeline.

In embodiments, the number of instruction bytes steered to a cluster (called a slice) may be anywhere from part of a 16B chunk to multiple 16B chunks and may depend not only on the cache line entry and exit points but also how many instructions the cache line contains. Since the STC steering is at chunk level, when the slice is part of a chunk, that chunk is steered to multiple clusters.

In embodiments, the STC mechanism of ISU 400 may be designed with the following objectives:
- Steer up to, but not more than, four (number of decoders in the cluster) instructions to the decode clusters. Steering less than four instructions causes wasted decode slots in the IDU pipe. Steering more instructions than a decode cluster can consume not only results in lost decode slots (e.g., in terms of lost decode slots, steering five instructions is just as bad as steering one instruction), it can also delay the read of uops from the younger decoders since DUQs are read in order.
- Consume valid chunks from up to four/six cache lines produced by the IFU.
- To minimize latency of a jump execution clear (Jeclear) caused by a branch mispredict, steering logic should fit in the timing requirements for I-cache tag (IT) pipeline to IF bypass.

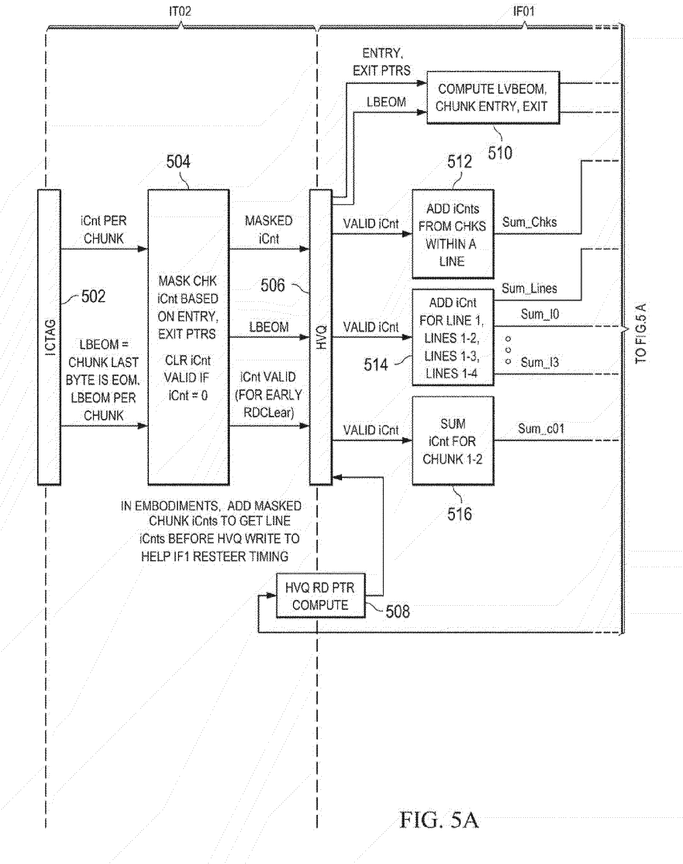

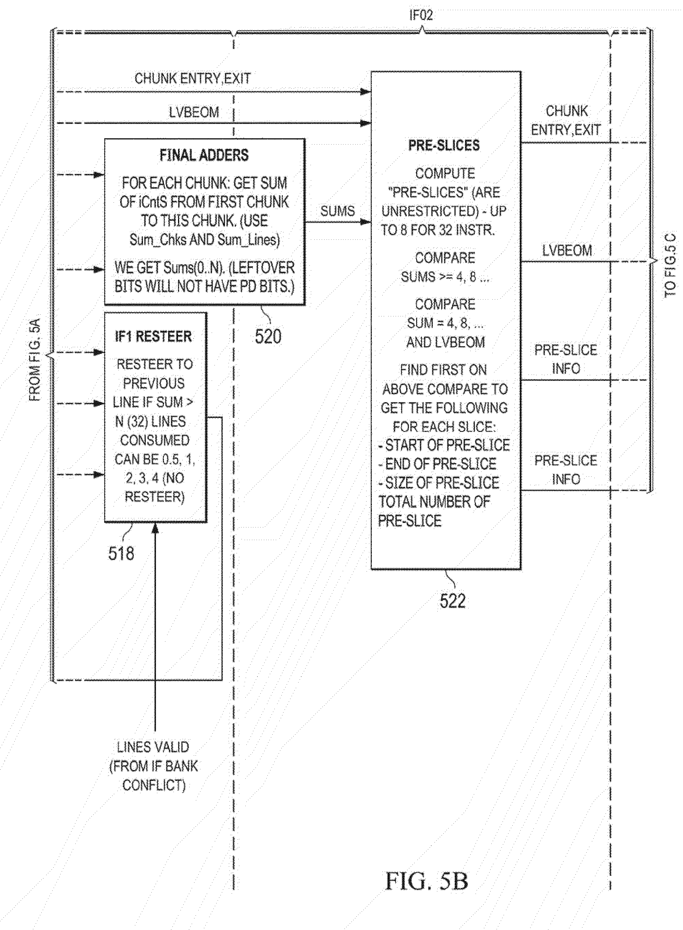

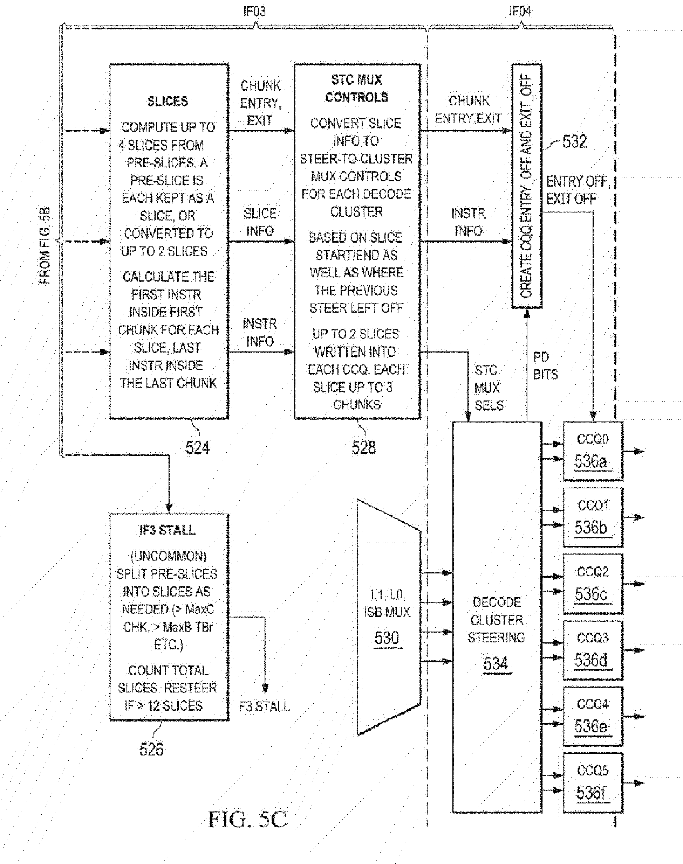

The following two variations (described further below in connection with the description of Figure 5) differ in where they get the information about the instruction length/counts.
- To implement pre-decode cache (PD$) bits based variable steering, the STC mechanism includes counting end-of-instruction or end-of-macro-instruction (e.g., EOM) markers in the pre-decode cache to figure out how many bytes need to be steered to cover one cycle worth of instructions.
- To implement I-cache tag (ICTAG) instruction count (ICnt) based variable steering, the STC mechanism includes saving information about the number of instruction-slots at chunk granularity in the ICTAG. Although the STC mechanism ignores the PD cache information according to this variation, the instruction steering within the decode cluster still uses the PD cache information.

Embodiments may include semi-variable steering, a more restrictive version of variable steering to allow the steering mechanism timing to fit into tighter timing constraints. Semi-variable steering may include limiting the slices so they do not cross a certain granularity. For example, for a bypass case, slices may be limited to chunk granularity, so that a slice cannot get instructions from two separate chunks (other than getting the first half of the bytes of a chunk-splitting instruction from a leftover chunk). In some embodiments, semi-variable steering may use ICnts (e.g., because of tighter timing constraints), and in some embodiments, semi-variable steering may use PD bits.

Figures 5A, 5B, and 5C are a combination of a flow and a block diagram illustrating both a method and some of the apparatus for instruction steering according to embodiments. The steering logic uses the following information to determine the slice for each cluster:
- Branch exit and entry points in 16B chunks. The IFU can fetch past up-to two taken branches and provide up-to four cache lines per fetch. 16B chunks between branch exit and entry points are invalid and not steered to any decoder clusters.
- ICnt for each chunk, i.e., the number of EOM markers in the chunk, where dual-slot allocate cases are counted as two.
- Last-byte EOM (LBEOM) markers for each chunk, i.e., an indication if the end of the chunk is an end of the instruction as well. This information is used to identify instructions split cases.

An IA32 instruction may be anywhere from 1B to 15B. As a result, four instructions can take up to 60B (4* 15B). In the worst case, these four instructions can split across six chunks (((4* 15B)+(2* 16B-2))/16B/chunk)). However, on average, the length of four consecutive instructions may be less, so embodiments may limit the number of chunks in a slice to a lower number (e.g., three).

Figures 5A, 5B, and 5C show blocks within stages of the IT and IF pipelines.

In the IF1 stage, block 510 represents determining, for each chunk, whether there is a predicted taken branch EOM in the chunk, and ORing this indication is with LBEOM read from the HVQ to create a LVBEOM (Last Valid Byte is EOM) indication for the chunk.

Also in the IF1 stage, blocks 512, 514, and 516 represent creating sums of chunks' ICnts within each line (i.e., for each line, add ICnts from first two chunks, first three chunks, and so on). The last of these sums gives the line ICnt (LICnt).

In other embodiments, a steering scheme may use static ICnt values from the ICTAG instead of dynamically masked (based on branch entry and exit points); however, the ICnt values may not reflect the sum of valid instruction-slots when all bytes of the chunk are not valid, which happens for a chunk containing a taken branch where the end of branch is not the last byte of the chunk. The bytes in the chunk after the end of that taken branch are not valid for decode. It also occurs for a chunk where the target of the taken branch is not the start byte of a chunk, such that all the bytes in the chunk before the target are not valid for decode.

In embodiments in which the steering logic uses masked PD bits, the counts are created dynamically and take into account bytes that are not valid due to predicted taken branches. For this ICnt based variable scheme, the ICnts are static, populated by the ILD. The earlier the end of a predicted taken branch or the later the target of the taken branch in the chunk, the bigger the inaccuracy. To somewhat compensate for that, the steering logic may pre-process the ICnt values for partially valid chunks. While the exact values may differ based on performance studies, embodiments may be designed based on the idea that the ICnt will be divided by two (shifted left by one) if half to three-quarters of the bytes of the chunk are not valid and will be divided by four (shifted left by two) if more than three-quarters of the chunk is not valid. Due to this estimation, a decoder to which a partial chunk is steered may get more or less than four instructions. To mitigate some of the penalty of getting too many instructions, the read bandwidth of the DUQ may be more than four uops.

In the IT02 stage, in block 504, the ICnt per chunk and LBEOM per chunk are read from ICTAG 502 and written into HVQ 506 along with other information about the line. Based on the entry and exit points of the taken branches, the count of invalid chunks is zeroed out and the counts of the partially valid chunks are modified.

Chunks containing the last byte of a taken branch are also marked, then ORed with the LBEOM indication to get the LVBEOM indication for that chunk.

Also in the IF1 stage, block 518 represents determining whether the cache lines read from the HVQ contain more instructions than the steering logic can consume. The first restriction for the steering logic is that it can consume up to thirty-two instructions per cycle. If the cache lines read from the HVQ contain more than thirty-two instructions, in block 508, the HVQ read pointers are re-steered to the line that is not completely consumed. In embodiments, box 518 may include using the LICnts to the find number of instructions in first line, in the first two lines, and so on (which may be qualified by the bank conflict logic). Lines with a sum of LICnts of thirty-two or below are considered to be consumable by the steering logic.

For example, if four cache lines are read from the HVQ, and each contains ten instructions, three lines will be consumed and the resteer logic will move the read pointer to the fourth line, so that the fourth line is read again in the next cycle.

In embodiments, the steering logic may keep track of whether and/or how many chunks were consumed from the first line not partially consumed and allow those chunks to be consumed by the next stages. Then, in the next cycle, the steering logic may zero out the ICnt for the chunks already consumed when the last is sent again as a result of re-steering. Thus, the steering logic may consume bytes at chunk granularity while the IFU is working at cache line granularity.

Beginning in the IF1 stage and finishing in the IF2 stage, block 520 represents creating up to sixteen sums (SUMs), the first sum equal to the masked ICnt of first chunk, the second sum equal to the sum of first two chunks, and so on.

In the IF2 stage, block 522 represents identifying pre-slices based on the SUMs and the LVBEOMs, where pre-slices are groups of four instructions, without any other restrictions such as chunk size and taken branch limitations. To do this, each of the SUMs are compared in parallel with eight multiples of four. Doing a find-first operation on these results, and taking into account LVBEOM, the start and end chunks of each pre-slice are identified.

In embodiments, pre-slices may be split into two or more slices, for example, if a pre-slice is spread across more than three chunks or a pre-slice contains more than one taken branch. If a pre-slice is broken into two or more slices, each resulting slice will contain less than four instructions (in embodiments with four instructions per pre-slice).

Although the variable steering mechanism may consume up to thirty-two instructions (i.e., eight pre-slices) per cycle, to limit the number of slices that can written into a CCQ to two, the number of slices (after breaking pre-slice into slices) per cycle may be limited to double the number of decode clusters. An implementation, to reduce design cost, may choose to limit the numbers of slices written into a CCQ to one, in which cases pre-slices breaking into slices will be further limited. Therefore, in IF2, after identifying the pre-slices, block 522 may include identifying how many of those are to be broken into how many slices to provide for counting the total number of slices.

In the IF3 stage, block 526 represents signaling an IF3 stall if it is determined that the number of slices exceeds the supported number (i.e., a number based on what is supported by the number of decode clusters and whether in a cycle one or two slices can be written in the decode cluster), to allow all the slices to be consumed before moving on to the next set of slices. Block 526 may include checking that the chunks in the slice do not exceed a maximum (> MaxC CHK), the taken branches do not exceed a maximum (> MaxB TBr), etc. Assuming that the need to split a pre-slice is rare, the need to split so many pre-slices that exceeding the number of slices limit of eight is exceedingly rare. Therefore, this IF3 stall is expected to be very rare, and, embodiments, may be changed to a re-steer (and introducing a bubble when this happens) to reduce design complexity/cost.

Also in the IF3 stage, block 524 represents creating the start and end of up to four slices. Pre-slices that do not need to be split are mapped directly to a slice. For example, if six valid pre-slices are identified and the second and fifth pre-slices need to be split into 2 slices each, the pre-slice mapping will look like:

| Slice ID | Corresponding Pre-Slice ID |
|---|---|
| 0 | 0 |
| 1 | 1 (first half) |
| 2 | 1 (second half) |
| 3 | 2 |
| 4 | 3 |
| 5 | 4 (first half) |
| 6 | 4 (second half) |
| 7 | 5 |

The variable steering mechanism writes slices to CCQs in round robin fashion, starting from the CCQs after the one to which the last slice was written in the previous cycle. Therefore, also in the IF3 stage, block 528 represents converting the slice start/end chunk indication into mux selects to perform slice-to-CCQ mapping. In addition, in embodiments including stall-and-merge support in the IFU, the first cache line may not be oldest cache line, which the mux controls take into account as well.

In embodiments, the steering logic may create an age ID for each cluster, to be incremented each time the steering logic rolls over from the last decode cluster to the first. Therefore, the age of a slice may be determined from a combination of an age ID and the cluster ID (e.g., an n-bit age-ID and a 3-bit cluster ID).

In the IF4 stage, instruction bytes from L1/L0/ISB multiplexer 520 are steered to CCQs 536a to 536f by decode cluster steering multiplexer 534. Also in the IF4 stage, block 532 represents calculating the cluster-chunk entry and exit offsets.

In embodiments, the steering control logic is implemented in parallel with the IF pipeline. The steering multiplexer controls are generated after three stages, at which point the raw bytes and PD bits are available from the IF pipe. In the last IS stage, the raw bytes, the PD bits, and other associated information are multiplexed, at chunk granularity, to the CCQs 536a to 536f. In embodiments in which up to two slices can be steered to a decode cluster and each slice can contain up to three chunks, the CCQ write logic and STC multiplexers will handle up to six (2*3) writes per decode cluster per cycle.

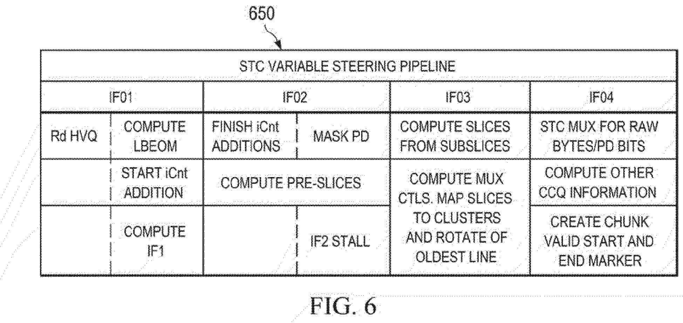

Figure 6 is a diagram representing the STC variable steering pipeline 660.

In embodiments, the STC logic may use information (FindN Offset information) to create chunk entry offsets and chunk exit offsets for each chunk (or slice) being written into the CCQs may also be used to handle dual-slot instructions. For example, if the FindNth EOM for the exit-offset of a slice is a dual-slot instruction, and it is the fourth instruction in the slice, then a hole may be left at the start of the next slice, and this slice is told that a hole is left in the next slice. In embodiments that assume perfect steering, it can be assumed that the exit-offset of a slice is always on the fourth instruction and a hole may always be left if it is a dual-slot instruction.

Various embodiments may include a variety of steering mechanism, including any combination of the following:
- ICTAG ICnt based variable steering, which may be used when the IF pipe reads from the HVQ. It may steer up to four instructions ("a slice") to each decode cluster.
   ∘ Dual-slot allocate cases may be counted as two instructions.
   ∘ Each slice may contain at most one taken branches.
   ∘ Each slice may contain at most three 16B chunks.
- Variable steering may steer more than six slices to the CCQs. As a result, the CCQs may allow up to two slices being written in a cycle, where each can contain up to three instructions.
- Variable steering may steer the first slice to the decode cluster next (after) the one to which the last slice was steered.
- Semi-variable steering may be used when the HVQ is bypassed (e.g., IT pipeline info is forwarded to the IF pipeline). To meet timing requirements, semi-variable steering may be more restrictive than variable steering. Semi-variable steering may attempt to steer up to 4 instructions (a slice) to each decode cluster. However:
   ∘ Each 16B chunk may be assigned to one or more decode clusters to decode. This results in decode bandwidth loss when number of instructions is the chunk are not a multiple of four.
   ∘ Each decode cluster gets one chunk to decode. However, an additional chunk may be steered to it if there is an instruction split across two chunks.
   ∘ Semi-variable steering may only steer up to four slices to the CCQs, starting from decode cluster 0.

Embodiments may include a combination of the above steering mechanisms. During execution of a program, under certain conditions like a branch mispredict, the latency may have higher priority than raw bandwidth. Embodiments may switch dynamically between the different steering mechanisms based on latency versus throughput priority to optimize for power and performance.

### Example Embodiments

In embodiments, an apparatus includes a decode cluster and chunk steering circuitry. The decode cluster includes multiple instruction decoders. The chunk steering circuitry is to break a sequence of instruction bytes into a plurality of chunks, create a slice from a one or more of the plurality of chunks based on one or more indications of a number of instructions in each of the one or more of the plurality of chunks, wherein the slice has a variable size and includes a plurality of instructions, and steer the slice to the decode cluster.

Any such embodiments may include any or any combination of the following aspects. Each of the plurality of chunks may have a fixed size, wherein the fixed size of each chunk is equal to the fixed size of every other chunk. The decode cluster may also include instruction steering circuitry to steer a first one of the plurality of instructions to a first one of the plurality of instruction decoders and to steer a second one of the plurality of instructions to a second one of the plurality of instruction decoders. The decode cluster may also include a cluster chunk queue to receive the slice from the chunk steering circuitry and to store the slice for instruction steering by the instruction steering circuitry. The instruction steering circuitry may also be to provide up to one instruction per clock cycle to each of the plurality of instruction decoders. The decode cluster may be one of a plurality of decode clusters, and the chunk steering circuitry may be to create a plurality of slices from the plurality of chunks, and steer each of the plurality of slices to a corresponding decode cluster of the plurality of decode clusters. The chunk steering circuitry may be to steer each of the plurality of slices to the corresponding decode cluster in round robin fashion. Each of the plurality of decode clusters may include a plurality of instruction decoders, and instruction steering circuitry to steer each instruction of one of the plurality of slices to a corresponding one of the plurality of instruction decoders. The apparatus may also include instruction fetch circuitry to provide the sequence of instruction bytes to the instruction steering circuitry. The sequence of instruction bytes may be one of a plurality of sequences of instruction bytes to be provided by the instruction fetch circuitry, wherein each of the plurality of sequences of instruction bytes is to include up to a fixed number of cache lines. The chunk steering circuitry may be to dynamically switch between creating the slice from one or more of the plurality of chunks and creating the slice from only one of the plurality of chunks. The chunk steering circuitry may be to dynamically switch based on a timing constraint. The one or more indications of a number of instructions in each of the one or more of the plurality of chunks may include one or more end-of-instruction markers. Creating the slice may include counting end-of-instruction markers. Creating the slice may include masking instruction bytes between a branch instruction and a target of the branch instruction. Creating the slice may include creating a pre-slice including a fixed number of instructions, and splitting the pre-slice based on a number of chunks in the pre-slice.

In embodiments, a method includes breaking a sequence of instruction bytes into a plurality of chunks, creating a slice from a one or more of the plurality of chunks based on one or more indications of a number of instructions in each of the one or more of the plurality of chunks, wherein the slice has a variable size and includes a plurality of instructions, and steering the slice to the decode cluster, wherein the decode cluster includes a plurality of instruction decoders.

Any such embodiments may include any or any combination of the following aspects. The method may include writing the slice to a cluster chunk queue, reading the slice from the cluster chunk queue, and steering a first one of the plurality of instructions to a first one of the plurality of instruction decoders and to steer a second one of the plurality of instructions to a second one of the plurality of instruction decoders. Each of the plurality of chunks may have a fixed size, wherein the fixed size of each chunk is equal to the fixed size of every other chunk. The decode cluster may also include instruction steering circuitry to steer a first one of the plurality of instructions to a first one of the plurality of instruction decoders and to steer a second one of the plurality of instructions to a second one of the plurality of instruction decoders. The decode cluster may also include a cluster chunk queue to receive the slice from the chunk steering circuitry and to store the slice for instruction steering by the instruction steering circuitry. The instruction steering circuitry may also be to provide up to one instruction per clock cycle to each of the plurality of instruction decoders. The decode cluster may be one of a plurality of decode clusters, and the chunk steering circuitry may be to create a plurality of slices from the plurality of chunks, and steer each of the plurality of slices to a corresponding decode cluster of the plurality of decode clusters. The chunk steering circuitry may be to steer each of the plurality of slices to the corresponding decode cluster in round robin fashion. Each of the plurality of decode clusters may include a plurality of instruction decoders, and instruction steering circuitry to steer each instruction of one of the plurality of slices to a corresponding one of the plurality of instruction decoders. The apparatus performing the method may also include instruction fetch circuitry to provide the sequence of instruction bytes to the instruction steering circuitry. The sequence of instruction bytes may be one of a plurality of sequences of instruction bytes to be provided by the instruction fetch circuitry, wherein each of the plurality of sequences of instruction bytes is to include up to a fixed number of cache lines. The chunk steering circuitry may be to dynamically switch between creating the slice from one or more of the plurality of chunks and creating the slice from only one of the plurality of chunks. The chunk steering circuitry may be to dynamically switch based on a timing constraint. The one or more indications of a number of instructions in each of the one or more of the plurality of chunks may include one or more end-of-instruction markers. Creating the slice may include counting end-of-instruction markers. Creating the slice may include masking instruction bytes between a branch instruction and a target of the branch instruction. Creating the slice may include creating a pre-slice including a fixed number of instructions, and splitting the pre-slice based on a number of chunks in the pre-slice.

In embodiments, a system includes a plurality of processor cores, wherein at least one of the processor cores includes a cache to store a sequence of instruction bytes; a decode cluster including a plurality of instruction decoders; and chunk steering circuitry to break the sequence of instruction bytes into a plurality of chunks, create a slice from one or more of the plurality of chunks based on one or more indications of a number of instructions in each of the one or more of the plurality of chunks, wherein the slice has a variable size and includes a plurality of instructions, and steer the slice to the decode cluster; and a memory controller to provide the sequence of instruction bytes to the cache from a dynamic random-access memory (DRAM).

Any such embodiments may include any or any combination of the following aspects. The system may include the DRAM. Each of the plurality of chunks may have a fixed size, wherein the fixed size of each chunk is equal to the fixed size of every other chunk. The decode cluster may also include instruction steering circuitry to steer a first one of the plurality of instructions to a first one of the plurality of instruction decoders and to steer a second one of the plurality of instructions to a second one of the plurality of instruction decoders. The decode cluster may also include a cluster chunk queue to receive the slice from the chunk steering circuitry and to store the slice for instruction steering by the instruction steering circuitry. The instruction steering circuitry may also be to provide up to one instruction per clock cycle to each of the plurality of instruction decoders. The decode cluster may be one of a plurality of decode clusters, and the chunk steering circuitry may be to create a plurality of slices from the plurality of chunks, and steer each of the plurality of slices to a corresponding decode cluster of the plurality of decode clusters. The chunk steering circuitry may be to steer each of the plurality of slices to the corresponding decode cluster in round robin fashion. Each of the plurality of decode clusters may include a plurality of instruction decoders, and instruction steering circuitry to steer each instruction of one of the plurality of slices to a corresponding one of the plurality of instruction decoders. The apparatus may also include instruction fetch circuitry to provide the sequence of instruction bytes to the instruction steering circuitry. The sequence of instruction bytes may be one of a plurality of sequences of instruction bytes to be provided by the instruction fetch circuitry, wherein each of the plurality of sequences of instruction bytes is to include up to a fixed number of cache lines. The chunk steering circuitry may be to dynamically switch between creating the slice from one or more of the plurality of chunks and creating the slice from only one of the plurality of chunks. The chunk steering circuitry may be to dynamically switch based on a timing constraint. The one or more indications of a number of instructions in each of the one or more of the plurality of chunks may include one or more end-of-instruction markers. Creating the slice may include counting end-of-instruction markers. Creating the slice may include masking instruction bytes between a branch instruction and a target of the branch instruction. Creating the slice may include creating a pre-slice including a fixed number of instructions, and splitting the pre-slice based on a number of chunks in the pre-slice.

In embodiments, an apparatus may include means for performing any function disclosed herein. In embodiments, an apparatus may include a data storage device that stores code that when executed by a hardware processor or controller causes the hardware processor or controller to perform any method or portion of a method disclosed herein. In embodiments, an apparatus may be as described in the detailed description. In embodiments, a method may be as described in the detailed description. In embodiments, a non-transitory machine-readable medium may store instructions that when executed by a machine causes the machine to perform any method or portion of a method disclosed herein. Embodiments may include any details, features, etc. or combinations of details, features, etc. described in this specification.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

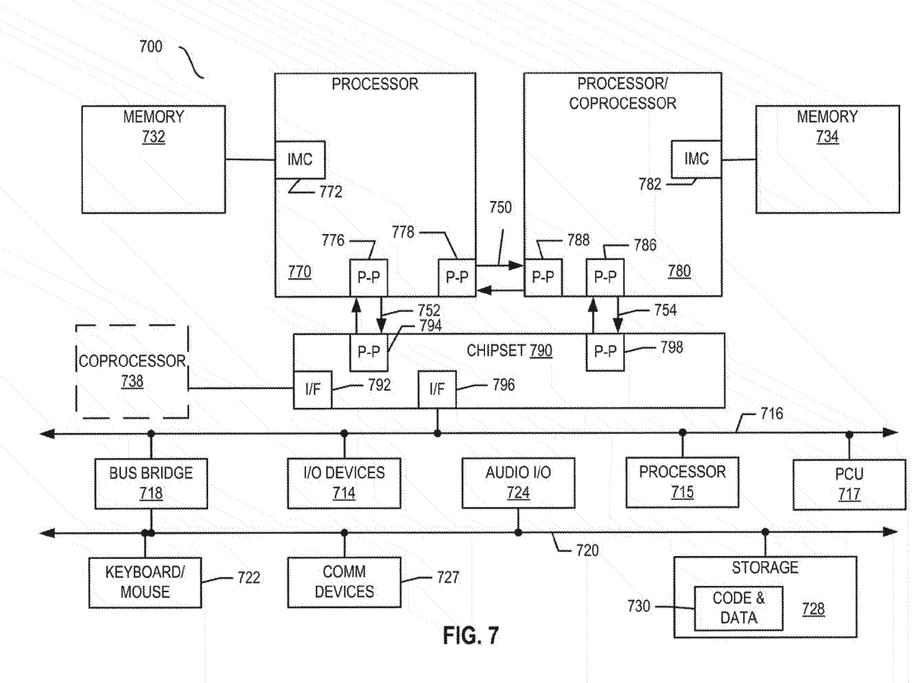

FIG. 7 illustrates embodiments of an exemplary system. Multiprocessor system 700 is a point-to-point interconnect system and includes a plurality of processors including a first processor 770 and a second processor 780 coupled via a point-to-point interconnect 750. In some embodiments, the first processor 770 and the second processor 780 are homogeneous. In some embodiments, first processor 770 and the second processor 780 are heterogenous.

Processors 770 and 780 are shown including integrated memory controller (IMC) unit circuitry 772 and 782, respectively. Processor 770 also includes as part of its interconnect controller units' point-to-point (P-P) interfaces 776 and 778; similarly, second processor 780 includes P-P interfaces 786 and 788. Processors 770, 780 may exchange information via the point-to-point (P-P) interface 750 using P-P interface circuits 778, 788. IMCs 772 and 782 couple the processors 770, 780 to respective memories, namely a memory 732 and a memory 734, which may be portions of main memory locally attached to the respective processors.

Processors 770, 780 may each exchange information with a chipset 790 via individual P-P interfaces 752, 754 using point to point interface circuits 776, 794, 786, 798. Chipset 790 may optionally exchange information with a coprocessor 738 via a high-performance interface 792. In some embodiments, the coprocessor 738 is a special-purpose processor, such as, for example, a high-throughput MIC processor, a network or communication processor, compression engine, graphics processor, GPGPU, embedded processor, or the like.

A shared cache (not shown) may be included in either processor 770, 780 or outside of both processors, yet connected with the processors via P-P interconnect, such that either or both processors' local cache information may be stored in the shared cache if a processor is placed into a low power mode.

Chipset 790 may be coupled to a first interconnect 716 via an interface 796. In some embodiments, first interconnect 716 may be a Peripheral Component Interconnect (PCI) interconnect, or an interconnect such as a PCI Express interconnect or another I/O interconnect. In some embodiments, one of the interconnects couples to a power control unit (PCU) 717, which may include circuitry, software, and/or firmware to perform power management operations with regard to the processors 770, 780 and/or co-processor 738. PCU 717 provides control information to a voltage regulator to cause the voltage regulator to generate the appropriate regulated voltage. PCU 717 also provides control information to control the operating voltage generated. In various embodiments, PCU 717 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 717 is illustrated as being present as a logic separate from the processor 770 and/or processor 780. In other cases, PCU 717 may execute on a given one or more of cores (not shown) of processor 770 or 780. In some cases, PCU 717 may be implemented as a microcontroller (dedicated or general-purpose) or other control logic configured to execute its own dedicated power management code, sometimes referred to as P-code. In yet other embodiments, power management operations to be performed by PCU 717 may be implemented externally to a processor, such as by way of a separate power management integrated circuit (PMIC) or another component external to the processor. In yet other embodiments, power management operations to be performed by PCU 717 may be implemented within BIOS or other system software.

Various I/O devices 714 may be coupled to first interconnect 716, along with an interconnect (bus) bridge 718 which couples first interconnect 716 to a second interconnect 720. In some embodiments, one or more additional processor(s) 715, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 716. In some embodiments, second interconnect 720 may be a low pin count (LPC) interconnect. Various devices may be coupled to second interconnect 720 including, for example, a keyboard and/or mouse 722, communication devices 727 and a storage unit circuitry 728. Storage unit circuitry 728 may be a disk drive or other mass storage device which may include instructions/code and data 730, in some embodiments. Further, an audio I/O 724 may be coupled to second interconnect 720. Note that other architectures than the point-to-point architecture described above are possible. For example, instead of the point-to-point architecture, a system such as multiprocessor system 700 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

FIG. 8 illustrates a block diagram of embodiments of a processor 800 that may have more than one core, may have an integrated memory controller, and may have integrated graphics. The solid lined boxes illustrate a processor 800 with a single core 802A, a system agent 810, a set of one or more interconnect controller units circuitry 816, while the optional addition of the dashed lined boxes illustrates an alternative processor 800 with multiple cores 802(A)-(N), a set of one or more integrated memory controller unit(s) circuitry 814 in the system agent unit circuitry 810, and special purpose logic 808, as well as a set of one or more interconnect controller units circuitry 816. Note that the processor 800 may be one of the processors 770 or 780, or co-processor 738 or 715 of FIG. 7.

Thus, different implementations of the processor 800 may include: 1) a CPU with the special purpose logic 808 being integrated graphics and/or scientific (throughput) logic (which may include one or more cores, not shown), and the cores 802(A)-(N) being one or more general purpose cores (e.g., general purpose in-order cores, general purpose out-of-order cores, or a combination of the two); 2) a coprocessor with the cores 802(A)-(N) being a large number of special purpose cores intended primarily for graphics and/or scientific (throughput); and 3) a coprocessor with the cores 802(A)-(N) being a large number of general purpose in-order cores. Thus, the processor 800 may be a general-purpose processor, coprocessor, or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 800 may be a part of and/or may be implemented on one or more substrates using any of a number of process technologies, such as, for example, BiCMOS, CMOS, or NMOS.

A memory hierarchy includes one or more levels of cache unit(s) circuitry 804(A)-(N) within the cores 802(A)-(N), a set of one or more shared cache unit circuitry 806, and external memory (not shown) coupled to the set of integrated memory controller unit circuitry 814. The set of one or more shared cache unit circuitry 806 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 812 interconnects the special purpose logic 808 (e.g., integrated graphics logic), the set of shared cache unit circuitry 806, and the system agent unit circuitry 810, alternative embodiments use any number of well-known techniques for interconnecting such units. In some embodiments, coherency is maintained between one or more of the shared cache unit circuitry 806 and cores 802(A)-(N).

In some embodiments, one or more of the cores 802(A)-(N) are capable of multi-threading. The system agent unit circuitry 810 includes those components coordinating and operating cores 802(A)-(N). The system agent unit circuitry 810 may include for example power control unit (PCU) circuitry and/or display unit circuitry (not shown). The PCU may be or may include logic and components needed for regulating the power state of the cores 802(A)-(N) and/or the special purpose logic 808 (e.g., integrated graphics logic). The display unit circuitry is for driving one or more externally connected displays.

The cores 802(A)-(N) may be homogenous or heterogeneous in terms of architecture instruction set; that is, two or more of the cores 802(A)-(N) may be capable of executing the same instruction set, while other cores may be capable of executing only a subset of that instruction set or a different instruction set.

### Exemplary Core Architectures

### In-order and out-of-order core block diagram

FIG. 9(A) is a block diagram illustrating both an exemplary in-order pipeline and an exemplary register renaming, out-of-order issue/execution pipeline according to embodiments. FIG. 9(B) is a block diagram illustrating both an exemplary embodiment of an in-order architecture core and an exemplary register renaming, out-of-order issue/execution architecture core to be included in a processor according to embodiments. The solid lined boxes in FIGS. 9(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 9(A), a processor pipeline 900 includes a fetch stage 902, an optional length decode stage 904, a decode stage 906, an optional allocation stage 908, an optional renaming stage 910, a scheduling (also known as a dispatch or issue) stage 912, an optional register read/memory read stage 914, an execute stage 916, a write back/memory write stage 918, an optional exception handling stage 922, and an optional commit stage 924. One or more operations can be performed in each of these processor pipeline stages. For example, during the fetch stage 902, one or more instructions are fetched from instruction memory, during the decode stage 906, the one or more fetched instructions may be decoded, addresses (e.g., load store unit (LSU) addresses) using forwarded register ports may be generated, and branch forwarding (e.g., immediate offset or a link register (LR)) may be performed. In one embodiment, the decode stage 906 and the register read/memory read stage 914 may be combined into one pipeline stage. In one embodiment, during the execute stage 916, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 900 as follows: 1) the instruction fetch 938 performs the fetch and length decoding stages 902 and 904; 2) the decode unit circuitry 940 performs the decode stage 906; 3) the rename/allocator unit circuitry 952 performs the allocation stage 908 and renaming stage 910; 4) the scheduler unit(s) circuitry 956 performs the schedule stage 912; 5) the physical register file(s) unit(s) circuitry 958 and the memory unit circuitry 970 perform the register read/memory read stage 914; the execution cluster 960 perform the execute stage 916; 6) the memory unit circuitry 970 and the physical register file(s) unit(s) circuitry 958 perform the write back/memory write stage 918; 7) various units (unit circuitry) may be involved in the exception handling stage 922; and 8) the retirement unit circuitry 954 and the physical register file(s) unit(s) circuitry 958 perform the commit stage 924.

FIG. 9(B) shows processor core 990 including front-end unit circuitry 930 coupled to an execution engine unit circuitry 950, and both are coupled to a memory unit circuitry 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front-end unit circuitry 930 may include branch prediction unit circuitry 932 coupled to an instruction cache unit circuitry 934, which is coupled to an instruction translation lookaside buffer (TLB) 936, which is coupled to instruction fetch unit circuitry 938, which is coupled to decode unit circuitry 940. In one embodiment, the instruction cache unit circuitry 934 is included in the memory unit circuitry 970 rather than the front-end unit circuitry 930. The decode unit circuitry 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 940 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM (not shown) or other medium that stores microcode for certain macroinstructions (e.g., in decode unit circuitry 940 or otherwise within the front-end unit circuitry 930). In one embodiment, the decode unit circuitry 940 includes a micro-operation (micro-op) or operation cache (not shown) to hold/cache decoded operations, micro-tags, or micro-operations generated during the decode or other stages of the processor pipeline 900. The decode unit circuitry 940 may be coupled to rename/allocator unit circuitry 952 in the execution engine unit circuitry 950.

The execution engine circuitry 950 includes the rename/allocator unit circuitry 952 coupled to a retirement unit circuitry 954 and a set of one or more scheduler(s) circuitry 956. The scheduler(s) circuitry 956 represents any number of different schedulers, including reservations stations, central instruction window, etc. In some embodiments, the scheduler(s) circuitry 956 can include arithmetic logic unit (ALU) scheduler/scheduling circuitry, ALU queues, arithmetic generation unit (AGU) scheduler/scheduling circuitry, AGU queues, etc. The scheduler(s) circuitry 956 is coupled to the physical register file(s) circuitry 958. Each of the physical register file(s) circuitry 958 represents one or more physical register files, different ones of which store one or more different data types, such as scalar integer, scalar floating point, packed integer, packed floating point, vector integer, vector floating point" status (e.g., an instruction pointer that is the address of the next instruction to be executed), etc. In one embodiment, the physical register file(s) unit circuitry 958 includes vector registers unit circuitry, writemask registers unit circuitry, and scalar register unit circuitry. These register units may provide architectural vector registers, vector mask registers, general-purpose registers, etc. The physical register file(s) unit(s) circuitry 958 is overlapped by the retirement unit circuitry 954 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 954 and the physical register file(s) circuitry 958 are coupled to the execution cluster(s) 960. The execution cluster(s) 960 includes a set of one or more execution unit circuitry 962 and a set of one or more memory access circuitry 964. The execution unit circuitry 962 may perform various arithmetic, logic, floating point, or other types of operations (e.g., shifts, addition, subtraction, multiplication) and on various types of data (e.g., scalar floating point, packed integer, packed floating point, vector integer, vector floating point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 956, physical register file(s) unit(s) circuitry 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 964). It should also be understood that where separate pipelines are used, one or more of these pipelines may be out-of-order issue/execution and the rest in-order.

In some embodiments, the execution engine unit circuitry 950 may perform load store unit (LSU) address/data pipelining to an Advanced Microcontroller Bus (AHB) interface (not shown), and address phase and writeback, data phase load, store, and branches.

The set of memory access circuitry 964 is coupled to the memory unit circuitry 970, which includes data TLB unit circuitry 972 coupled to a data cache circuitry 974 coupled to a level 2 (L2) cache circuitry 976. In one exemplary embodiment, the memory access unit circuitry 964 may include a load unit circuitry, a store address unit circuit, and a store data unit circuitry, each of which is coupled to the data TLB circuitry 972 in the memory unit circuitry 970. The instruction cache circuitry 934 is further coupled to a level 2 (L2) cache unit circuitry 976 in the memory unit circuitry 970. In one embodiment, the instruction cache 934 and the data cache 974 are combined into a single instruction and data cache (not shown) in L2 cache unit circuitry 976, a level 3 (L3) cache unit circuitry (not shown), and/or main memory. The L2 cache unit circuitry 976 is coupled to one or more other levels of cache and eventually to a main memory.

The core 990 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 990 includes logic to support a packed data instruction set extension (e.g., AVX1, AVX2), thereby allowing the operations used by many multimedia applications to be performed using packed data.

### Exemplary Execution Unit(s) Circuitry

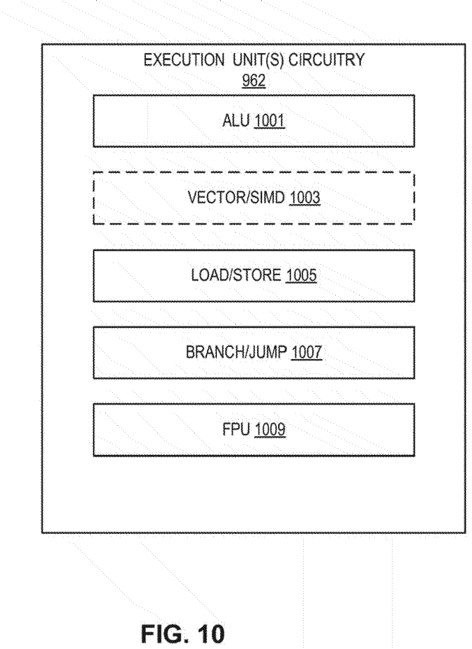

FIG. 10 illustrates embodiments of execution unit(s) circuitry, such as execution unit(s) circuitry 962 of FIG. 9(B). As illustrated, execution unit(s) circuity 962 may include one or more ALU circuits 1001, vector/SIMD unit circuits 1003, load/store unit circuits 1005, and/or branch/jump unit circuits 1007. ALU circuits 1001 perform integer arithmetic and/or Boolean operations. Vector/SIMD unit circuits 1003 perform vector/SIMD operations on packed data (such as SIMD/vector registers). Load/store unit circuits 1005 execute load and store instructions to load data from memory into registers or store from registers to memory. Load/store unit circuits 1005 may also generate addresses. Branch/jump unit circuits 1007 cause a branch or jump to a memory address depending on the instruction. FPU circuits 1009 perform floating-point arithmetic. The width of the execution unit(s) circuitry 962 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

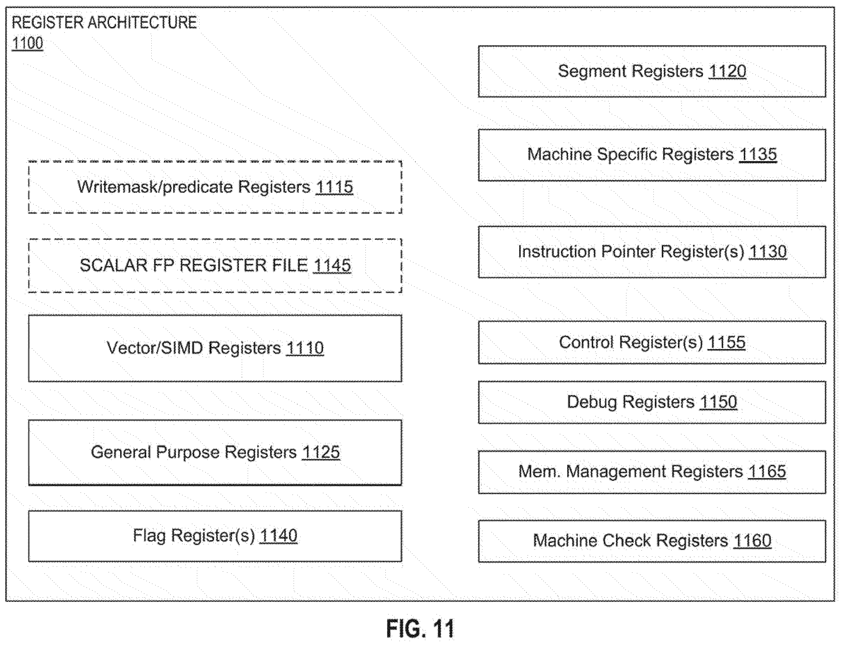

FIG. 11 is a block diagram of a register architecture 1100 according to some embodiments. As illustrated, there are vector/SIMD registers 1110 that vary from 128-bit to 1,024 bits width. In some embodiments, the vector/SIMD registers 1110are physically 512-bits and, depending upon the mapping, only some of the lower bits are used. For example, in some embodiments, the vector/SIMD registers 1110 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 1100 includes writemask/predicate registers 1115. For example, in some embodiments, there are 8 writemask/predicate registers (sometimes called k0 through k7) that are each 16-bit, 32-bit, 64-bit, or 128-bit in size. Writemask/predicate registers 1115 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 1115 corresponds to a data element position of the destination. In other embodiments, the writemask/predicate registers 1115 are scalable and consists of a set number of enable bits for a given vector element (e.g., 8 enable bits per 64-bit vector element).

The register architecture 1100 includes a plurality of general-purpose registers 1125. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 1100 includes scalar floating-point register 1145 which is used for scalar floating-point operations on 32/64/80-bit floating point data using the x87 instruction set extension or as MMX registers to perform operations on 64-bit packed integer data, as well as to hold operands for some operations performed between the MMX and XMM registers.

One or more flag registers 1140 (e.g., EFLAGS, RFLAGS, etc.) store status and control information for arithmetic, compare, and system operations. For example, the one or more flag registers 1140 may store condition code information such as carry, parity, auxiliary carry, zero, sign, and overflow. In some embodiments, the one or more flag registers 1140 are called program status and control registers.

Segment registers 1120 contain segment points for use in accessing memory. In some embodiments, these registers are referenced by the names CS, DS, SS, ES, FS, and GS.

Machine specific registers (MSRs) 1135 control and report on processor performance. Most MSRs 1135 handle system related functions and are not accessible to an application program. Machine check registers 1160 consist of control, status, and error reporting MSRs that are used to detect and report on hardware errors.

One or more instruction pointer register(s) 1130 store an instruction pointer value. Control register(s) 1155 (e.g., CR0-CR4) determine the operating mode of a processor (e.g., processor 770, 780, 738, 718, and/or 800) and the characteristics of a currently executing task. Debug registers 1150 control and allow for the monitoring of a processor or core's debugging operations.

Memory management registers 1165 specify the locations of data structures used in protected mode memory management. These registers may include a GDTR, IDRT, task register, and a LDTR register.

Alternative embodiments may use wider or narrower registers. Additionally, alternative embodiments may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

FIG. 12 illustrates embodiments of an instruction format. As illustrated, an instruction may include multiple components including, but not limited to one or more fields for: one or more prefixes 1201, an opcode 1203, addressing information 1205 (e.g., register identifiers, memory addressing information, etc.), a displacement value 1207, and/or an immediate 1209. Note that some instructions utilize some or all of the fields of the format whereas others may only use the field for the opcode 1203. In some embodiments, the order illustrated is the order in which these fields are to be encoded, however, it should be appreciated that in other embodiments these fields may be encoded in a different order, combined, etc.

The prefix(es) field(s) 1201, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1203 is used to at least partially define the operation to be performed upon a decoding of the instruction. In some embodiments, a primary opcode encoded in the opcode field 1203 is 1, 2, or 3 bytes in length. In other embodiments, a primary opcode can be a different length. An additional 3-bit opcode field is sometimes encoded in another field.

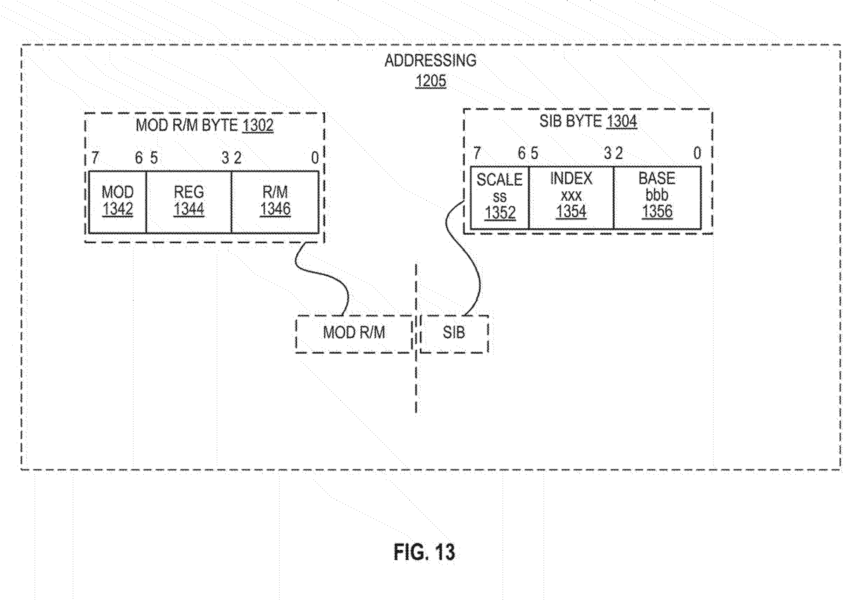

The addressing field 1205 is used to address one or more operands of the instruction, such as a location in memory or one or more registers. FIG. 13 illustrates embodiments of the addressing field 1205. In this illustration, an optional ModR/M byte 1302 and an optional Scale, Index, Base (SIB) byte 1304 are shown. The ModR/M byte 1302 and the SIB byte 1304 are used to encode up to two operands of an instruction, each of which is a direct register or effective memory address. Note that each of these fields are optional in that not all instructions include one or more of these fields. The MOD R/M byte 1302 includes a MOD field 1342, a register field 1344, and R/M field 1346.

The content of the MOD field 1342 distinguishes between memory access and non-memory access modes. In some embodiments, when the MOD field 1342 has a value of b11, a register-direct addressing mode is utilized, and otherwise register-indirect addressing is used.

The register field 1344 may encode either the destination register operand or a source register operand, or may encode an opcode extension and not be used to encode any instruction operand. The content of register index field 1344, directly or through address generation, specifies the locations of a source or destination operand (either in a register or in memory). In some embodiments, the register field 1344 is supplemented with an additional bit from a prefix (e.g., prefix 1201) to allow for greater addressing.

The R/M field 1346 may be used to encode an instruction operand that references a memory address, or may be used to encode either the destination register operand or a source register operand. Note the R/M field 1346 may be combined with the MOD field 1342 to dictate an addressing mode in some embodiments.

The SIB byte 1304 includes a scale field 1352, an index field 1354, and a base field 1356 to be used in the generation of an address. The scale field 1352 indicates scaling factor. The index field 1354 specifies an index register to use. In some embodiments, the index field 1354 is supplemented with an additional bit from a prefix (e.g., prefix 1201) to allow for greater addressing. The base field 1356 specifies a base register to use. In some embodiments, the base field 1356 is supplemented with an additional bit from a prefix (e.g., prefix 1201) to allow for greater addressing. In practice, the content of the scale field 1352 allows for the scaling of the content of the index field 1354 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 1207 provides this value. Additionally, in some embodiments, a displacement factor usage is encoded in the MOD field of the addressing field 1205 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 1207.

In some embodiments, an immediate field 1209 specifies an immediate for the instruction. An immediate may be encoded as a 1-byte value, a 2-byte value, a 4-byte value, etc.

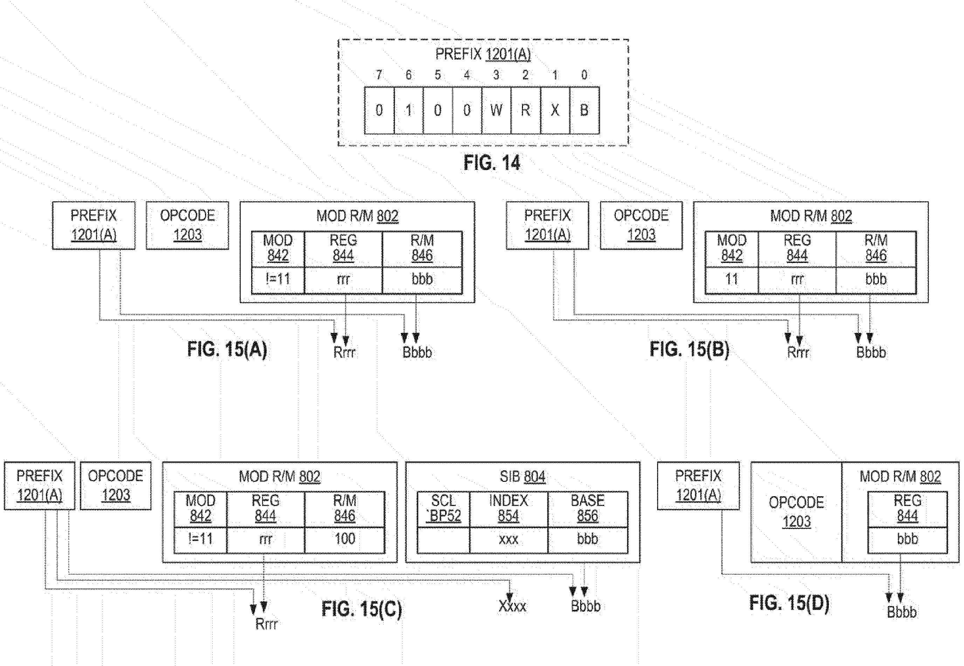

FIG. 14 illustrates embodiments of a first prefix 1201(A). In some embodiments, the first prefix 1201(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1201(A) may specify up to three registers using 3-bit fields depending on the format: 1) using the reg field 1344 and the R/M field 1346 of the Mod R/M byte 1302; 2) using the Mod R/M byte 1302 with the SIB byte 1304 including using the reg field 1344 and the base field 1356 and index field 1354; or 3) using the register field of an opcode.

In the first prefix 1201(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1344 and MOD R/M R/M field 1346 alone can each only address 8 registers.

In the first prefix 1201(A), bit position 2 (R) may an extension of the MOD R/M reg field 1344 and may be used to modify the ModR/M reg field 1344 when that field encodes a general-purpose register, a 64-bit packed data register (e.g., an SSE register), or a control or debug register. R is ignored when Mod R/M byte 1302 specifies other registers or defines an extended opcode.

Bit position 1 (X) X bit may modify the SIB byte index field 1354.

Bit position B (B) B may modify the base in the Mod R/M R/M field 1346 or the SIB byte base field 1356; or it may modify the opcode register field used for accessing general purpose registers (e.g., general purpose registers 1125).

FIGS. 15(A)-(D) illustrate embodiments of how the R, X, and B fields of the first prefix 1201(A) are used. FIG. 15(A) illustrates R and B from the first prefix 1201(A) being used to extend the reg field 1344 and R/M field 1346 of the MOD R/M byte 1302 when the SIB byte 13 04 is not used for memory addressing. FIG. 15(B) illustrates R and B from the first prefix 1201(A) being used to extend the reg field 1344 and R/M field 1346 of the MOD R/M byte 1302 when the SIB byte 13 04 is not used (register-register addressing). FIG. 15(C) illustrates R, X, and B from the first prefix 1201(A) being used to extend the reg field 1344 of the MOD R/M byte 1302 and the index field 1354 and base field 1356 when the SIB byte 13 04 being used for memory addressing. FIG. 15(D) illustrates B from the first prefix 1201(A) being used to extend the reg field 1344 of the MOD R/M byte 1302 when a register is encoded in the opcode 1203.

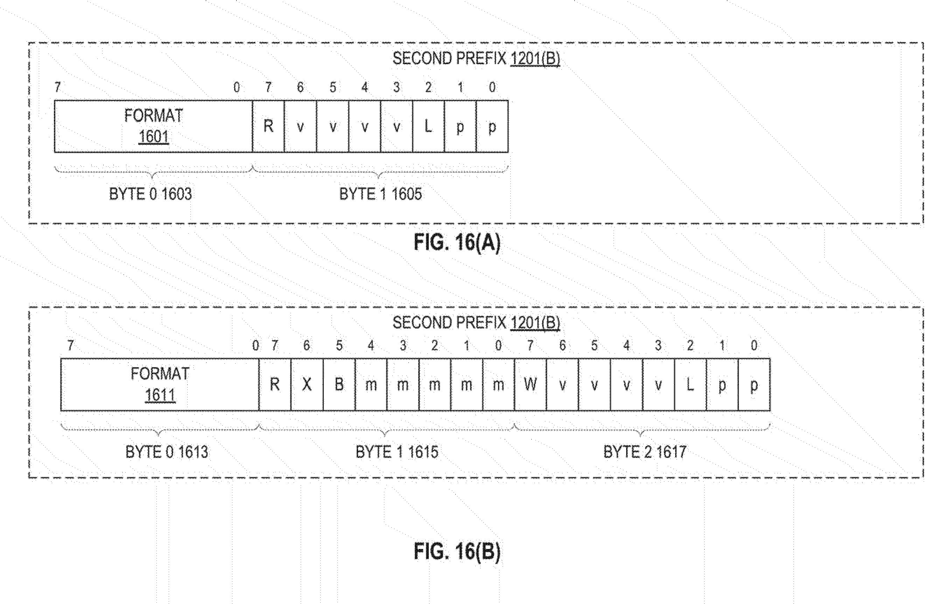

FIGS. 16(A)-(B) illustrate embodiments of a second prefix 1201(B). In some embodiments, the second prefix 1201(B) is an embodiment of a VEX prefix. The second prefix 1201(B) encoding allows instructions to have more than two operands, and allows SIMD vector registers (e.g., vector/SIMD registers 1110) to be longer than 64-bits (e.g., 128-bit and 256-bit). The use of the second prefix 1201(B) provides for three-operand (or more) syntax. For example, previous two-operand instructions performed operations such as A = A + B, which overwrites a source operand. The use of the second prefix 1201(B) enables operands to perform nondestructive operations such as A = B + C.

In some embodiments, the second prefix 1201(B) comes in two forms - a two-byte form and a three-byte form. The two-byte second prefix 1201(B) is used mainly for 128-bit, scalar, and some 256-bit instructions; while the three-byte second prefix 1201(B) provides a compact replacement of the first prefix 1201(A) and 3-byte opcode instructions.

FIG. 16(A) illustrates embodiments of a two-byte form of the second prefix 1201(B). In one example, a format field 1601 (byte 0 1603) contains the value C5H. In one example, byte 1 1605 includes a "R" value in bit[7]. This value is the complement of the same value of the first prefix 1201(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1346 to encode the instruction operand that references a memory address or encode either the destination register operand or a source register operand.

Instructions that use this prefix may use the Mod R/M reg field 1344 to encode either the destination register operand or a source register operand, be treated as an opcode extension and not used to encode any instruction operand.

For instruction syntax that support four operands, vvvv, the Mod R/M R/M field 1346, and the Mod R/M reg field 1344 encode three of the four operands. Bits[7:4] of the immediate 1209 are then used to encode the third source register operand.

FIG. 16(B) illustrates embodiments of a three-byte form of the second prefix 1201(B). in one example, a format field 1611 (byte 0 1613) contains the value C4H. Byte 1 1615 includes in bits[7:5] "R," "X," and "B" which are the complements of the same values of the first prefix 1201(A). Bits[4:0] of byte 1 1615 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1617 is used similar to W of the first prefix 1201(A) including helping to determine promotable operand sizes. Bit[2] is used to dictate the length (L) of the vector (where a value of 0 is a scalar or 128-bit vector ) and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1346 to encode the instruction operand that references a memory address or encode either the destination register operand or a source register operand.

Instructions that use this prefix may use the Mod R/M reg field 1344 to encode either the destination register operand or a source register operand, be treated as an opcode extension and not used to encode any instruction operand.

For instruction syntax that support four operands, vvvv, the Mod R/M R/M field 1346, and the Mod R/M reg field 1344 encode three of the four operands. Bits[7:4] of the immediate 1209 are then used to encode the third source register operand.

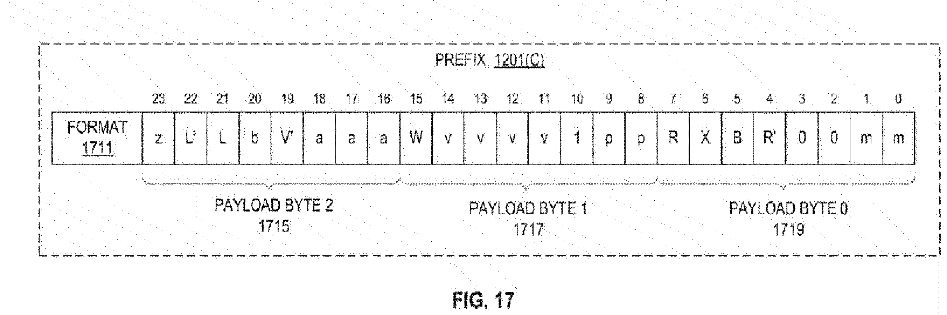

FIG. 17 illustrates embodiments of a third prefix 1201(C). In some embodiments, the first prefix 1201(A) is an embodiment of an EVEX prefix. The third prefix 1201(C) is a four-byte prefix.

The third prefix 1201(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 11) or predication utilize this prefix. Opmask register allow for conditional processing or selection control. Opmask instructions, whose source/destination operands are opmask registers and treat the content of an opmask register as a single value, are encoded using the second prefix 1201(B).

The third prefix 1201(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1201(C) is a format field 1711 that has a value, in one example, of 62H. Subsequent bytes are referred to as payload bytes 1715-1719and collectively form a 24-bit value of P[23:0] providing specific capability in the form of one or more fields (detailed herein).

In some embodiments, P[1:0] of payload byte 1719 are identical to the low two mmmmm bits. P[3:2] are reserved in some embodiments. Bit P[4] (R') allows access to the high 16 vector register set when combined with P[7] and the ModR/M reg field 1344. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 1344 and ModR/M R/M field 1346. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1201(A) and second prefix 1211(B) and may serve as an opcode extension bit or operand size promotion.

P[18:16] specify the index of a register in the opmask (writemask) registers (e.g., writemask/predicate registers 1115). In one embodiment, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 1201(C) are detailed in the following tables.

**32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB .index | GPR | Memory addressing |
| **VIDX** | V' | X | SIB .index | Vector | VSIB memory addressing |

**Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2nd Source or Destination |
| **RM** | ModR/M R/M | GPR, Vector | 1st Source or Destination |
| **BASE** | ModR/M R/M | GPR | Memory addressing |
| **INDEX** | SIB .index | GPR | Memory addressing |
| **VIDX** | SIB .index | Vector | VSIB memory addressing |

**Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2nd Source |
| **RM** | ModR/M R/M | k0-7 | 1st Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores," may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

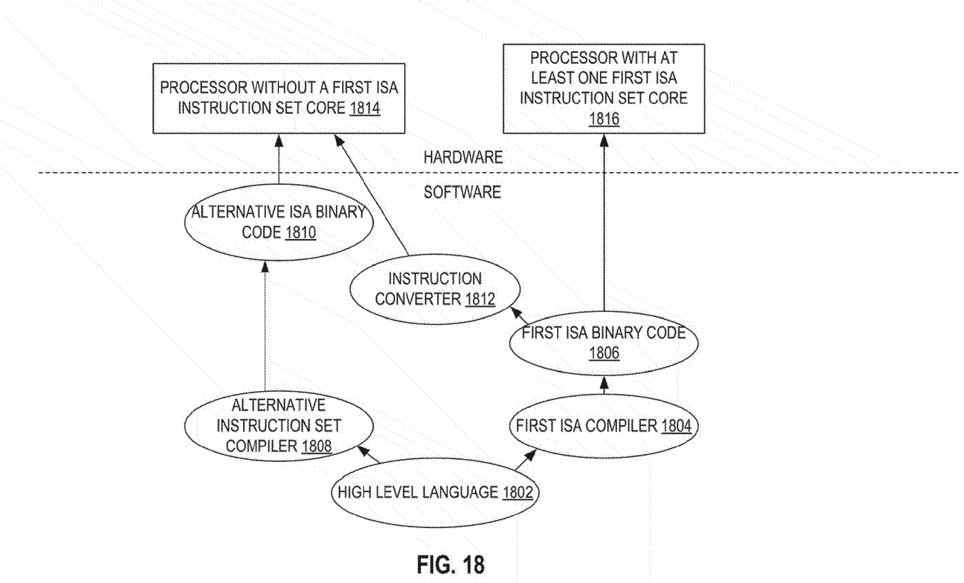

FIG. 18 illustrates a block diagram contrasting the use of a software instruction converter to convert binary instructions in a source instruction set to binary instructions in a target instruction set according to embodiments. In the illustrated embodiment, the instruction converter is a software instruction converter, although alternatively the instruction converter may be implemented in software, firmware, hardware, or various combinations thereof. FIG. 18 shows a program in a high-level language 1802 may be compiled using a first ISA compiler 1804 to generate first ISA binary code 1806 that may be natively executed by a processor with at least one first instruction set core 1816. The processor with at least one first ISA instruction set core 1816 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1804 represents a compiler that is operable to generate first ISA binary code 1806 (e.g., object code) that can, with or without additional linkage processing, be executed on the processor with at least one first ISA instruction set core 1816. Similarly, FIG. 18 shows the program in the high-level language 1802 may be compiled using an alternative instruction set compiler 1808 to generate alternative instruction set binary code 1810 that may be natively executed by a processor without a first ISA instruction set core 1814. The instruction converter 1812 is used to convert the first ISA binary code 1806 into code that may be natively executed by the processor without a first ISA instruction set core 1814. This converted code is not likely to be the same as the alternative instruction set binary code 1810 because an instruction converter capable of this is difficult to make; however, the converted code will accomplish the general operation and be made up of instructions from the alternative instruction set. Thus, the instruction converter 1812 represents software, firmware, hardware, or a combination thereof that, through emulation, simulation, or any other process, allows a processor or other electronic device that does not have a first ISA instruction set processor or core to execute the first ISA binary code 1806.

In the preceding description, numerous specific details, such as component and system configurations, may be set forth in order to provide a more thorough understanding. It will be appreciated, however, by one skilled in the art, that embodiments may be practiced without such specific details. Additionally, some well-known structures, circuits, and other features have not been shown in detail, to avoid unnecessarily obscuring the description.

As used in the description and the drawings, items referred to as blocks, boxes, units, engines, etc. may represent and/or be implemented in hardware, logic gates, memory cells, circuits, circuitry, etc.

References to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment requires at least one of A, at least one of B, or at least one of C to each be present.

As used in this description and the claims and unless otherwise specified, the use of the ordinal adjectives "first," "second," "third," etc. to describe an element merely indicates that a particular instance of an element or different instances of like elements are being referred to, and is not intended to imply that the elements so described must be in a particular sequence, either temporally, spatially, in ranking, or in any other manner. Also, as used in descriptions of embodiments, a "/" character between terms may mean that an embodiment may include or be implemented using, with, and/or according to the first term and/or the second term (and/or any other additional terms).

In this specification, operations in flow diagrams may have been described with reference to example embodiments of other figures. However, it should be understood that the operations of the flow diagrams may be performed by embodiments other than those discussed with reference to other figures, and the embodiments discussed with reference to other figures may perform operations different than those discussed with reference to flow diagrams. Furthermore, while the flow diagrams in the figures show a particular order of operations performed by certain embodiments, it should be understood that such order is provided as an example (e.g., alternative embodiments may perform the operations in a different order, combine certain operations, overlap certain operations, etc.).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
a decode cluster including a plurality of instruction decoders; and
chunk steering circuitry to:
break a sequence of instruction bytes into a plurality of chunks,
create a slice from one or more of the plurality of chunks based on one or more indications of a number of instructions in each of the one or more of the plurality of chunks, wherein the slice has a variable size and includes a plurality of instructions, and
steer the slice to the decode cluster.

2. The apparatus of claim 1, wherein each of the plurality of chunks has a fixed size, wherein the fixed size of each chunk is equal to the fixed size of every other chunk.

3. The apparatus of claim 1 or claim 2, wherein the decode cluster also includes instruction steering circuitry to steer a first one of the plurality of instructions to a first one of the plurality of instruction decoders and to steer a second one of the plurality of instructions to a second one of the plurality of instruction decoders.

4. The apparatus of claim 3, wherein the decode cluster also includes a cluster chunk queue to receive the slice from the chunk steering circuitry and to store the slice for instruction steering by the instruction steering circuitry.

5. The apparatus of any of claims 1 to 4, wherein the decode cluster is one of a plurality of decode clusters, and the chunk steering circuitry is to:
create a plurality of slices from the plurality of chunks, and
steer each of the plurality of slices to a corresponding decode cluster of the plurality of decode clusters.

6. The apparatus of claim 5, wherein each of the plurality of decode clusters includes:
a plurality of instruction decoders, and
instruction steering circuitry to steer each instruction of one of the plurality of slices to a corresponding one of the plurality of instruction decoders.

7. The apparatus of any of claims 1 to 6, further comprising instruction fetch circuitry to provide the sequence of instruction bytes to the instruction steering circuitry.

8. The apparatus of any of claims 1 to 6, wherein the chunk steering circuitry is to dynamically switch between creating the slice from one or more of the plurality of chunks and creating the slice from only one of the plurality of chunks.

9. The apparatus of any of claims 1 to 6, wherein the one or more indications of a number of instructions in each of the one or more of the plurality of chunks includes one or more end-of-instruction markers.

10. The apparatus of any of claims 1 to 6, wherein creating the slice is to include masking instruction bytes between a branch instruction and a target of the branch instruction.

11. The apparatus of claim 1, wherein creating the slice is to include:
creating a pre-slice including a fixed number of instructions, and
splitting the pre-slice based on a number of chunks in the pre-slice.

12. A method comprising:
breaking a sequence of instruction bytes into a plurality of chunks,
creating a slice from a one or more of the plurality of chunks based on one or more indications of a number of instructions in each of the one or more of the plurality of chunks, wherein the slice has a variable size and includes a plurality of instructions, and
steering the slice to the decode cluster, wherein the decode cluster includes a plurality of instruction decoders.

13. The method of claim 12, further comprising:
writing the slice to a cluster chunk queue,
reading the slice from the cluster chunk queue, and
steering a first one of the plurality of instructions to a first one of the plurality of instruction decoders and to steer a second one of the plurality of instructions to a second one of the plurality of instruction decoders.

14. A system comprising:
a plurality of processor cores, wherein at least one of the processor cores includes:
a cache to store a sequence of instruction bytes;
a decode cluster including a plurality of instruction decoders; and
chunk steering circuitry to:
break the sequence of instruction bytes into a plurality of chunks,
create a slice from a one or more of the plurality of chunks based on one or more indications of a number of instructions in each of the one or more of the plurality of chunks, wherein the slice has a variable size and includes a plurality of instructions, and
steer the slice to the decode cluster; and
a memory controller to provide the sequence of instruction bytes to the cache from a
dynamic random-access memory (DRAM).

15. The system of claim 14, further comprising the DRAM.
